## Europäisches Patentamt
## European Patent Office
## Office européen des brevets

⑩

(11) Publication number: **0 022 435**
**B1**

## (12) EUROPEAN PATENT SPECIFICATION

(45) Date of publication of patent specification: **09.10.85**

(21) Application number: **80850108.4**

(22) Date of filing: **01.07.80**

(51) Int. Cl.⁴: **B 65 G 53/24,** B 27 G 3/00, B 08 B 15/00, B 65 F 5/00

(54) Evacuation system for particulate waste material.

(30) Priority: **06.07.79 SE 7905920**

(43) Date of publication of application:
**14.01.81 Bulletin 81/02**

(45) Publication of the grant of the patent:
**09.10.85 Bulletin 85/41**

(84) Designated Contracting States:
**AT BE CH DE FR GB IT LI NL**

(56) References cited:
DE-A-2 337 528
DE-A-2 854 127
DE-A-2 925 587
DE-C- 838 676
GB-A- 722 992
GB-A-1 300 821
US-A-1 448 430
US-A-1 816 223
US-A-3 120 432
US-A-3 236 565
US-A-3 314 098
US-A-3 989 308

(73) Proprietor: **Fläkt Aktiebolag
Sickla Allé 13
S-131 34 Nacka (SE)**

(72) Inventor: **Bokfors, Stefan Johan Albert
Bränningevägen 29
S-121 71 Johanneshov (SE)**
Inventor: **Lokander, John Erik
Granitvägen 4
S-618 00 Kolmarden (SE)**

(74) Representative: **Bergvall, Sven
Bergenstrahle & Lindvall AB Sankt Paulsgatan 1
S-116 47 Stockholm (SE)**

Courier Press, Leamington Spa, England.

Description

This invention relates to an evacuation system for transporting particulate waste material from a plurality of suction points to a central collecting point. It is particularly but not exclusively applicable to the removal of the dust produced by machines such as woodworking machines in a factory.

Certain previously known systems for transporting waste material such as sanding dust or sawdust, have comprised branch conduits leading from the various machines which produce the dust to a common duct or manifold. These systems have incorporated a suction blower to produce an air flow from the machines through the branch conduits and the manifold to a central collecting point and have relied on this air flow to transport the dust over the full distance from the machine to the collecting point. This prevents the waste material from being spread openly in the air and results in substantial improvements in the working environment.

There are, however, several drawbacks with these previously known systems. Since the waste material is conveyed all the way from the suction points to the central collecting point first through relatively thin branch conduits and then through a comparatively coarse manifold the magnitude of the air velocities within all parts of the system must be thus adapted that the air is capable of carrying the waste material even through the coarse manifold. Thus, in a system which relies on the air flow in the manifold to carry the waste material, any substantial alteration in the number of points from which waste material is to be removed requires virtually a rebuilding of the system, because the changed air flow in the manifold will require a different cross-sectional area if the correct flow velocity is to be maintained. The plant must consequently from the beginning be adapted and dimensioned to the maximum number of machines which are to be connected to the system and which can be simultaneously operated. This means that these previously known systems do not permit any flexibility but can only be utilized for a certain number of machines located at certain points which have been calculated from the beginning.

A further drawback is of course that both the fan capacity and the filter capacity will have to be adapted to the most unfavourable operating conditions to provide safe transportation of waste material from suction points within all parts of the plant to the central collecting point. This means that both the transport fans and the filters have to be heavily overdimensioned, which in turn will cause a comparatively large energy consumption.

Alternatively, it has been suggested to transport the waste material from different suction points to a common manifold in which the material is extracted and removed by means of a conveyor to a central collecting point. The conveyor can either be a mechanical conveyor, a blower or even a transport fluid. This conveying system will eliminate a number of drawbacks in previously known systems, which have been indicated above, but in certain cases, for example in small industries, a system in accordance with this known arrangement is unnecessary, big and expensive.

GB—A—722 992 relates to a pneumatic conveyor plant in which two or more independently operated ducts are connected to a separating device for discharging the material carried by the conveying air. In this plant each duct is provided with throttling members controlled in such a way that the sum of the air flow resistances in the conveyor ducts remain substantially constant.

A disadvantage of this known plant is of course that in a system with a great number of branch ducts there will be a need for the same number of throttling members and control gauges which makes the system complicated, vulnerable and expensive.

The object of the present invention is to provide a much simpler solution with higher efficiency and reliability.

This object is realized by the fact that means are provided to detect the under-pressure in the collecting container to control either the speed of the transport blower, or valve means in a separate suction conduit which does not transport waste material, in order to maintain the under-pressure in the container at substantially constant value and hence the air speed in the branch conduits which are open for communication.

One embodiment of the invention will now be described in more detail with reference to the accompanying drawings, in which

Fig. 1 is a diagrammatic planview of a workshop in which the different machines are connected to an evacuation system according to the invention,

Fig. 2 is a sideview of a container forming part of the system according to Fig. 1,

Fig. 3 is a sectional view through the container shown in Figs. 1 and 2, and

Fig. 4 is a principal block diagram of a system according to the invention.

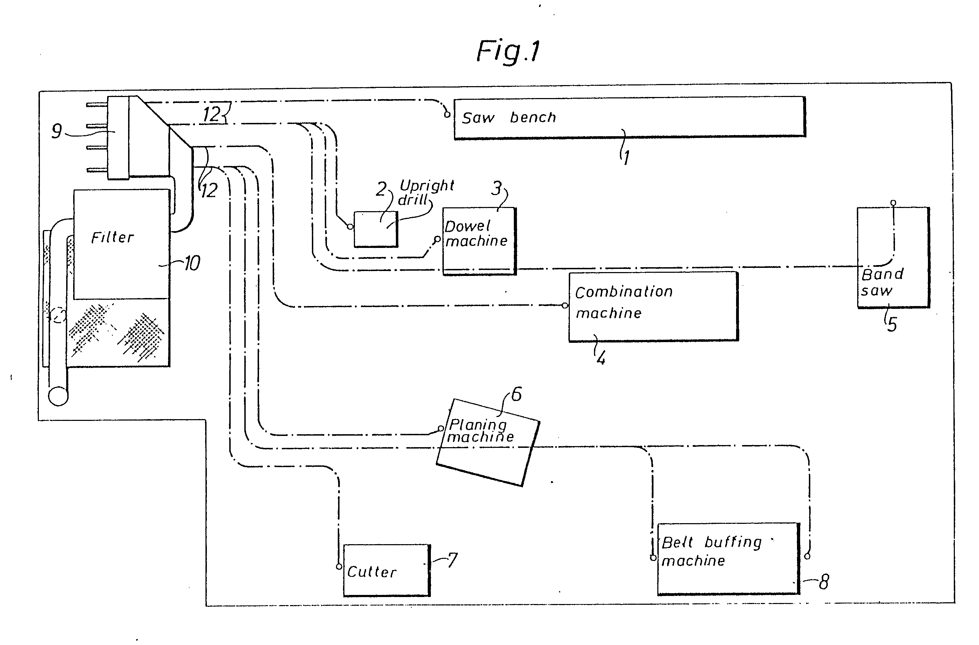

The factory shown in Fig. 1 comprises a number of different woodworking machines, e.g. a saw bench 1, an upright drill 2, a dowel machine 3, a combination machine 4, a band saw 5, a planing machine 6, a cutter 7 and a belt buffing machine 8, from which the waste material is sucked away in branch conduits to the central collecting point which comprises a container 9. From the container the transport air is further brought to flow through an air filter 10. The transport air in the system is generated in a conventional manner by means of one or several blowers (not shown).

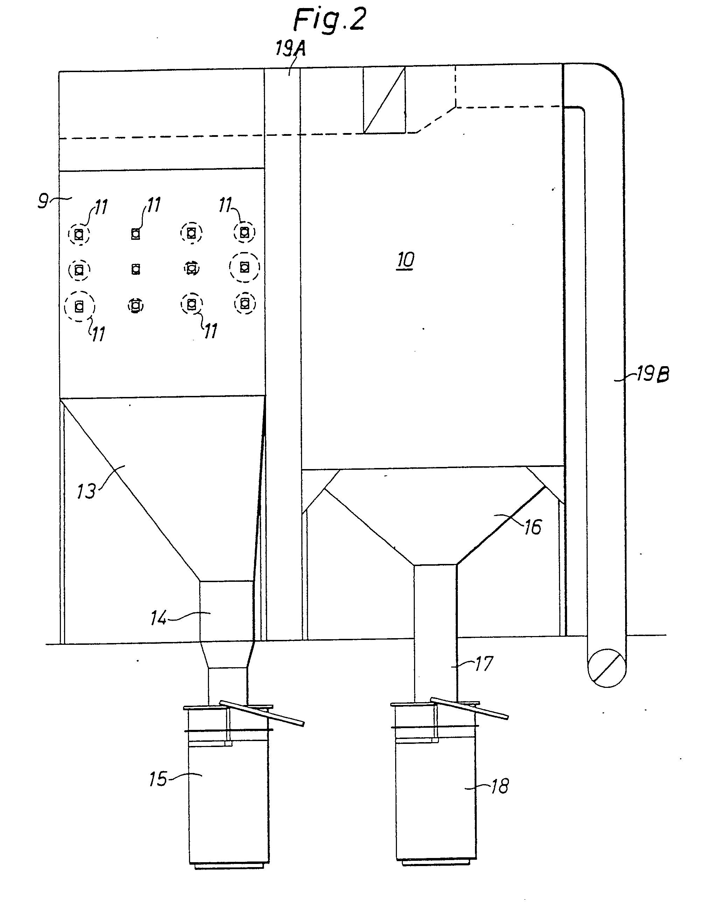

As appears in Fig. 2 the upper portion of the container 9 is provided with several openings 11 for the branch conduits 12 which are connected to the container, whereas the lower portion is provided with a funnel-shaped bottom 13 to collect the waste material which is conveyed through an emptying duct 14 to a depositing container 15 which preferably should be transportable. The dimensions of the collecting container 9 relative to the branch conduits are thus chosen that the air velocity in the container 9 is insufficient to carry the waste material through an exhaust air channel 19A which is arranged in the upper part of the container 9 and which is connected to a filter chamber 10. The lower portion of the filter chamber is in a conventional way formed with a funnel-shaped bottom 16 with a duct 17 for emptying the waste material into a container 18. The filter chamber is connected to suction blowers via a channel 19B, said blowers generating the necessary under-pressure in the system for producing the air flow which carries the waste material. The filter in the filter chamber 10 can be of any conventional kind, for example in the form of a cyclone or a hose filter. Even combinations of these two kinds can be utilized.

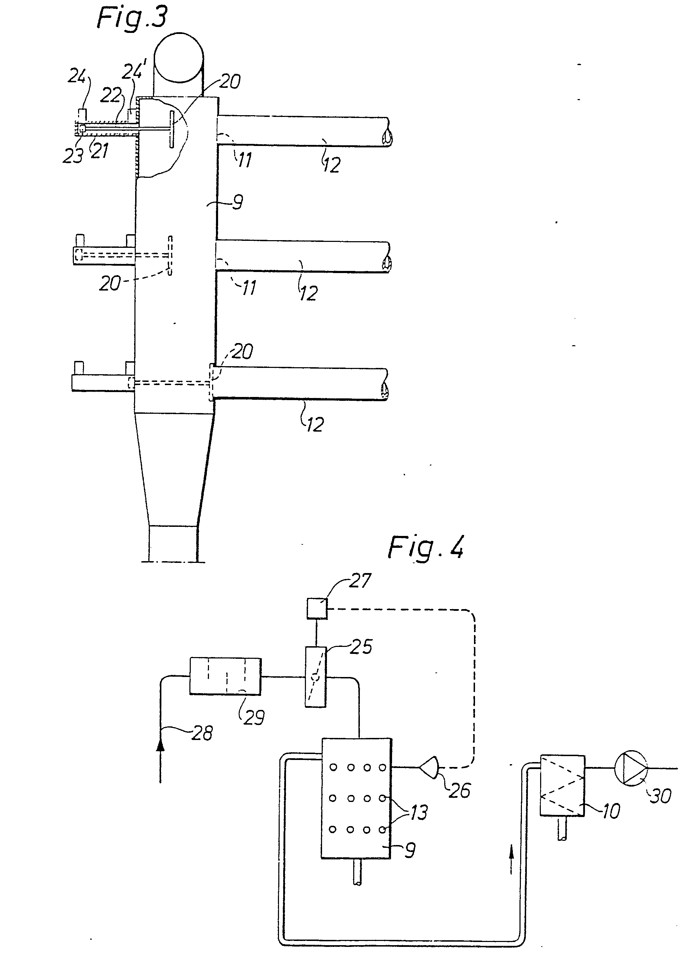

In Fig. 3 the collecting container 9 is schematically shown in a side-cross-sectional view and it is shown how the valves 20 can be arranged to close the openings 11 for the branch conduits 12. In the embodiment shown in this Figure the valves 20 are operated by means of pressure air cylinders 21 and the valve axes 22 are provided with pistons 23 which are displaced in cylinders depending on which one of the two pressure air valves 24 and 24' are operated to permit pressure air to be entered into the cylinder 21.

The valves can of course be located in the branch conduits at any suitable point between the suction point and the collecting container and be designed as conventional throttle valves or sliding valves.

Instead of the method of collecting the waste material by means of a depositing container 15 located under the collecting container 9 as shown in Fig. 2, the waste material which is extracted and collected in the funnel 13 can be transported to a container in a separate pneumatic system.

In Fig. 4 it is schematically shown how the under-pressure in the collecting container 9 is maintained at a constant level by means of a bypass valve 25, the position of which is controlled by means of a pressure sensing device 26 which is arranged in a servo-circuit and which generates pulses to a device 27 controlling the position of the valve. This valve is connected to a duct 28 through which air is sucked away from the inside of a building. This has the advantage that a substantially constant air flow is sucked away from the interior of the building and that the air speed between the container 9 and the filter 10 also will remain at a constant value.

The prerequisite is of course that the under-pressure in the collecting container 9 is maintained at a constant level and this is provided by means of the servo-system described above. The suction duct 28 could suitably be provided with a noise trap 29. The under-pressure in the system is generated by means of a blower 30 schematically indicated in the figure. The purified air could suitably be used as return air or could be exhausted to the open air through a heat exchanger.

The transportation of waste material from each machine will only be in operation when the machine is operating. The machine controls the pressure air controlled valves shown in Fig. 3 by means of a switch or a photoelectric cell on the machine table, which will be affected when the machine is taken into operation.

## Claim

An evacuation system for conveying particulate waste material from a plurality of collecting places to a common and centrally located depositing place, in which the material by means of transport air is continuously transferred in branch conduits (12) from the collecting places to the common depositing place, comprising a collecting container (9), the upper portion of which being provided with several openings (11) for the branch conduits (12) which are connected to the container (9) and the lower portion of which being provided with means for disposing of the particulate material, a transport air blower (30) being connected to the collecting container (9) to generate the airflow in the branch conduits necessary for the transportation of the waste material, individually operated valves (20) being arranged in each of the branch conduits (12) to open or close each branch conduit for air communication, the dimensions of the branch conduits and the collecting container (9) being thus chosen that the velocity of airflow in each branch conduit is sufficiently high but in the container is insufficiently high to carry the particulate waste material, characterized in that means (26) are provided to detect the underpressure in the collecting container (9) to control either the speed of the transport blower (30), or valve means (26) in a separate suction conduit (28) which does not transport waste material, in order to maintain the under-pressure in the container (9) at substantially constant value and hence the air speed in the branch conduits which are open for communication.

## Patentanspruch

Absaugsystem für teilchenförmige Abfallstoffe von mehreren Sammelstellen zu einer gemeinsamen und zentral angeordneten Stelle, bei welchem die Abfallstoffe kontinuierlich mittels Transportluft in Zweigleitungen (12) von den Sammelstellen zur gemeinsamen Ablagestelle befördert werden, mit einem Sammelbehälter (9), dessen oberer Teil mit mehreren Öffnungen (11) für die an den Behälter (9) angeschlossenen Zweigleitungen (12) versehen ist und dessen unterer Teil mit einer Einrichtung zur Abgabe der teilchenförmigen Stoffe versehen ist, einem Transportluftgebläse (30), das an den Sammelbehälter (9) angeschlossen ist, um in den Zweigleitungen die erforderlichen Luftströmung für den Transport der Abfallstoffe zu erzeugen, individuell betätigten Ventilen (20) in jeder der Zweigleitungen (12), um jede Zweigleitung für die Luftzufuhr zu öffnen oder zu schließen, wobei die Abmessungen der Zweigleitungen und des Sammelbehälters (9) so groß gewählt sind, daß die Geschwindigkeit der Luftströmung in jeder Zweigleitung ausreichend hoch ist, aber im Behälter nicht ausreicht, um die teilchenförmigen Abfallstoffe zu tragen, dadurch gekennzeichnet, daß Mittel (26) vorgesehen sind, welche den Unterdruck im Sammelbehälter (9) ermitteln, um entweder die Geschwindigkeit des Transportluftgelbäses (30) oder Ventileinrichtungen (26) in einer getrennten Saugleitung (28) zu steuern, die keine Abfallstoffe transportiert, um den Unterdruck im Behälter (9) und damit die Luftgeschwindigkeit in den mit ihm in offener Verbindung stehenden Zweigleitungen auf einem im wesentlichen konstanten Wert zu halten.

## Revendication

Système d'évacuation pour transporter des déchets en poussière à partir d'une pluralité de points où ils sont recueillis jusqu'à un point commun de dépôt situé centralement, dans lequel la matière est transférée de façon continue dans des conduites ramifiées (12) au moyen d'air transporteur, depuis les points où la matière est recueillie jusqu'aux points communs de dépôt, comprenant un conteneur collecteur (9), dont la partie supérieure est pourvue de plusieurs ouvertures (11) pour les conduites ramifiées (12) qui sont reliées au conteneur (9) et dont la partie inférieure est pourvue de moyens pour déposer la poussière, une soufflante (30) d'air de transport étant reliée au conteneur collecteur (9) pour engendrer l'écoulement de l'air dans les conduites ramifiées, qui est nécéssaire pour le transport des déchets, des soupapes (20) actionnées individuellement étant disposées dans chacune des conduites ramifiées (12) pour ouvrir ou fermer chaque conduite ramifiée afin d'assurer la communication de l'air, les dimensions des conduites ramifiées et du conteneur collecteur (9) étant choisies de manière que la vitesse d'écoulement de l'air dans chaque conduite ramifiée soit suffisamment élevée mais insuffisamment élevée dans le conteneur pour transporter les déchets en poussière, caractérisé en ce que des moyens (26) sont prévus pour détecter la dépression règnant dans le conteneur collecteur (9) pour commander la vitesse de la soufflante (30) de transport ou une vanne (25) dans un conduit séparé (28) d'aspiration qui ne transporte pas de déchets, afin de maintenir la depression dans le conteneur (9) à une valeur à peu près constante et de ce fait la vitesse de l'air dans les conduites ramifiées qui sont ouvertes pour assurer la communication.

Fig.1

0 022 435

Fig.2

0 022 435

2

*Fig.3*

*Fig.4*

3